# EUROPEAN PATENT APPLICATION

(11) **EP 2 930 893 A1**
(43) Date of publication of application: **14.10.2015**
(21) Application number: 13859758.8
(22) Date of filing: 19.11.2013
(51) Int. Cl.: H04L 12/761, H04L 12/717

(54) **COMMUNICATION SYSTEM, CONTROL APPARATUS, COMMUNICATION CONTROL METHOD, TRANSFER CONTROL METHOD, AND TRANSFER CONTROL PROGRAM**

(30) Priority: 05.12.2012 JP 2012266598
(71) Applicant: NEC Corporation, Tokyo 108-8001 (JP)
(72) Inventor: SUGYOU, Kazushi, Tokyo 108-8001 (JP); CHIBA, Yasunobu, Tokyo 108-8001 (JP)
(74) Representative: Robson, Aidan John
(86) International application number: PCT/JP2013/006778
(87) International publication number: WO 2014/087591

(57) **Abstract**

A communication system in which multiple communication terminals communicate through a network includes: a control apparatus 4 for controlling packet transfer in the network; and a proxy server 3 for receiving a multicast packet transmitted from a communication terminal and transmitting a unicast packet to each of communication terminals belonging to a group corresponding to the multicast packet, respectively, wherein the control apparatus 4 controls packet transfer in the network so that the multicast packet transmitted by the communication terminal will be transferred to the proxy server 3.

## Description

### Technical Field

The present invention relates to a communication system, a control apparatus, a communication control method in the communication system, and a transfer control method and program in the control apparatus, and to an information processing apparatus for performing multicast communication.

### Background Art

In a computer network, there exists a technology called multicast communication for transmitting packets to multiple terminals belonging to a predetermined group. In the multicast communication, a multicast address including an identifier of a group to which multiple terminals as packet destinations belong is used.

When receiving a multicast packet, a communication device (a router or the like) transfers the packet to terminals belonging to a group corresponding to the multicast packet. In order to enable multicast communication, the communication device (the router or the like) is required to manage an identifier of the group, and packet transfer destinations corresponding to the identifier. Since the terminals belonging to the group are dynamically changed, the communication device is required to manage an identifier of the group and transfer destinations corresponding to the identifier routinely.

In order to perform multicast communication, a communication device on a network is required to have the above management function. Therefore, in a network where there exists any communication device that does not have the above management function, there is a possibility that the multicast communication is not performed properly.

Patent Literature (PTL) 1 discloses a technique for enabling pseudo multicast communication even in a network where there exists a communication device that does not have a function of performing multicast communication. A relay station described in PTL 1 manages a group of multicast communication, and destination addresses of terminals belonging to the group. When performing multicast communication, the relay station transmits a packet to the destination address of each terminal belonging to the group through unicast communication. Since the packet is transmitted by multiple unicast communications to the respective destination addresses of the terminals, the technique described in PTL 1 can be applied to a network where there exists a device that does not have a function of performing multicast communication to enable pseudo multicast communication in the network.

PTL 2 describes a technique for reducing the load on multicast processing in the wide-area Ethernet (registered trademark) composed of a core device such as a switch or a router, and multiple edge devices such as switches or routers directly or indirectly connected to the core device. In the technique described in PTL 2, when the load on the core device is high, a multicast source edge device transmits multicast frames by unicast as the number of required destination edge devices, rather than by multicast, to reduce the load on the core device.

### Citation List

### Patent Literatures

PTL 1: Japanese Patent Application Laid-Open No. 2005-197844
PTL 2: Japanese Patent Application Laid-Open No. 2011-217038

### Summary of Invention

### Technical Problem

The technique described in PTL 1 is such that each of relay stations manages, in a decentralized manner, a table in which a correspondence relationship between a group of multicast communication and destination addresses of terminals belonging to the group is listed to perform pseudo multicast communication. Since the table is managed in a decentralized manner, respective relay stations need to communicate with each other to exchange table information. Therefore, there arises a problem of the management cost for respective relay stations to manage tables for multicast communication in a decentralized manner.

It is an exemplary object of the present invention to provide a communication system, a control apparatus, a communication control method in the communication system, and a transfer control method and program in the control apparatus, which enable multicast communication at a low management cost in a network where there exists a device that does not have a function corresponding to the multicast communication.

### Solution to Problem

The communication system according to the present invention is a communication system in which multiple communication terminals communicate through a network, including: a control apparatus which controls packet transfer in the network; and a proxy server which receives a multicast packet transmitted from each of communication terminals and transmits unicast packets to communication terminals belonging to a group corresponding to the multicast packet, respectively, wherein the control apparatus controls packet transfer in the network so that the multicast packet transmitted by the communication terminal will be transferred to the proxy server.

The control apparatus according to the present invention is a control apparatus in a communication system in which multiple communication terminals communicate through a network, wherein the control apparatus controls packet transfer in the network so that a multicast packet transmitted by each of communication terminals will be transferred to a proxy server for transmitting a unicast packet to each of communication terminals belonging to a group corresponding to the multicast packet, respectively.

The communication control method according to the present invention is a communication control method in a communication system in which multiple communication terminals communicate through a network, wherein a control apparatus controls packet transfer in the network so that a multicast packet transmitted by each of communication terminals will be transferred to a proxy server, and the proxy server receives the multicast packet transmitted from the communication terminal and transmits a unicast packet to each of communication terminals belonging to a group corresponding to the multicast packet, respectively.

The transfer control method according to the present invention is a transfer control method in a control apparatus applied to a communication system in which multiple communication terminals communicate through a network, wherein packet transfer in the network is so controlled that a multicast packet transmitted by each of communication terminals will be transferred to a proxy server for transmitting a unicast packet to each of communication terminals belonging to a group corresponding to the multicast packet, respectively.

The transfer control program according to the present invention is a transfer control program in a communication system in which multiple communication terminals communicate through a network, the program causing a computer to execute a process of controlling packet transfer in the network so that a multicast packet transmitted by each of communication terminals will be transferred to a proxy server for transmitting a unicast packet to each of communication terminals belonging to a group corresponding to the multicast packet, respectively.

### Advantageous Effect of Invention

The present invention has the effect of enabling multicast communication at a low management cost in a network where there exists a device that does not have a function corresponding to multicast communication.

### Brief Description of Drawings

[FIG. 1] It depicts a block diagram showing an example of the configuration of a communication system in a first exemplary embodiment.
[FIG. 2] It depicts an explanatory diagram showing a state of transmitting and receiving packets through a proxy server.
[FIG. 3] It depicts a sequence diagram showing an example of the operation of the communication system in the first exemplary embodiment.
[FIG. 4] It depicts a block diagram showing an example of the configuration of the proxy server.
[FIG. 5] It depicts an explanatory diagram showing an example of the structure of information stored in a management DB.
[FIG. 6] It depicts a schematic diagram showing an example of the header s of packets transmitted and received by a proxy server in a second exemplary embodiment.
[FIG. 7] It depicts a block diagram showing an example of the configuration of a control apparatus.
[FIG. 8] It depicts a block diagram showing an example of the configuration of a communication system in a third exemplary embodiment.
[FIG. 9] It depicts a block diagram showing an example of the configuration of a communication system in a fourth exemplary embodiment.
[FIG. 10] It depicts a block diagram showing an example of the configuration of a communication system in a fifth exemplary embodiment.
[FIG. 11] It depicts a schematic diagram showing an example of the headers of packets transmitted and received by a proxy server in the fifth exemplary embodiment.

### Description of Embodiments

### Exemplary Embodiment 1

A first exemplary embodiment of the present invention will be described below with reference to the accompanying drawings.

In the first exemplary embodiment, multicast packets transmitted from communication terminals are aggregated on a proxy server. A control apparatus for controlling a network controls the network to aggregate multicast packets on the proxy server. This enables a predetermined proxy server to perform centralized control of the execution of unicast communication based on multicast communication.

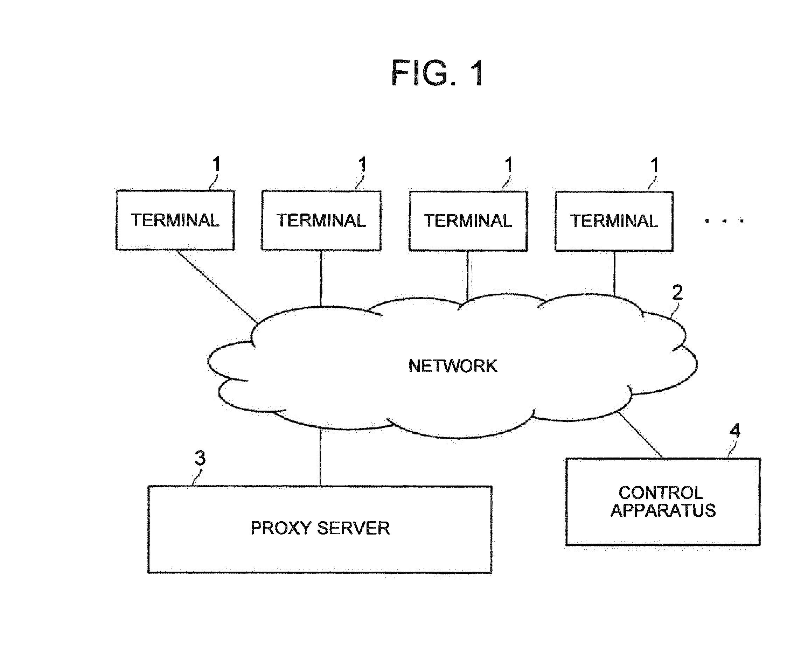

FIG. 1 is a block diagram showing an example of the configuration of a communication system in a first exemplary embodiment. The communication system in the exemplary embodiment includes a proxy server 3 and a control apparatus 4.

Each of multiple terminals 1 is communicable with the proxy server 3 through a network 2. The control apparatus 4 is connected to the network 2.

The terminals 1 have the function of transmitting a multicast packet to perform multicast communication.

The proxy server 3 has the function of, based on a multicast packet received from a terminal 1, transmitting packets through unicast communication to terminals 1 corresponding to a group of the multicast packet. In other words, the proxy server 3 has the function of performing pseudo multicast communication on behalf of a communication device such as a router.

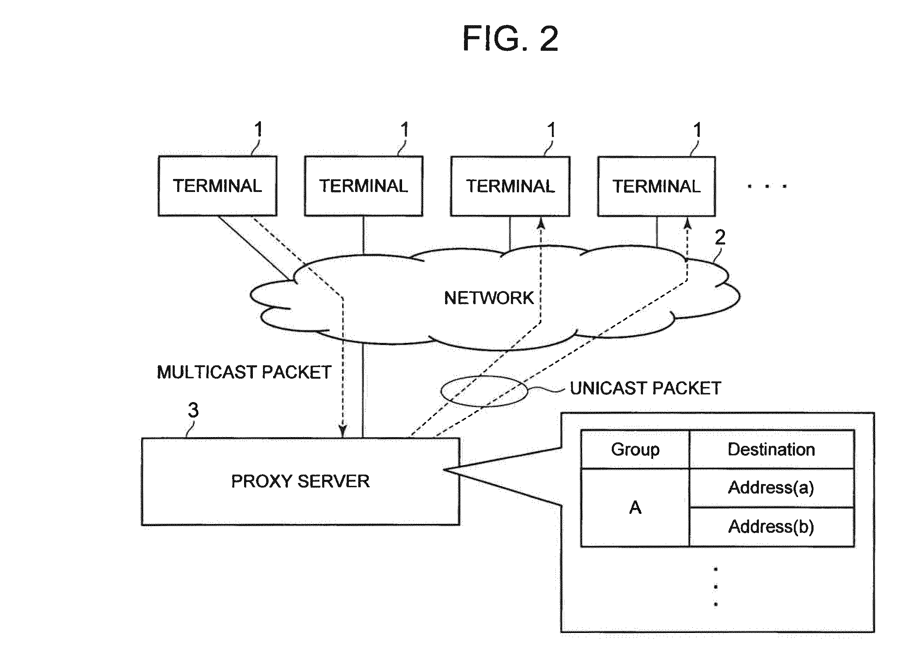

FIG. 2 is an explanatory diagram showing a state of transmitting and receiving packets through the proxy server 3.

When receiving a multicast packet from a terminal 1, the proxy server 3 transmits unicast packets to the addresses of terminals 1 belonging to a group corresponding to the multicast packet. For example, as shown in FIG. 2, the proxy server 3 has a table for managing, for each group of multicast communication, the addresses of terminals 1 belonging to the group. "Group" included in the table shown in FIG. 2 represents a group of multicast communication. Further, "Destination" represents the address of each terminal belonging to the group of multicast communication, i.e., the destination address. In the example shown in FIG. 2, "Address(a)" and "Address(b)" are registered as the addresses of terminals belonging to "Group A." For example, the proxy server 3 refers to the table to search for the addresses of terminals 1 belonging to the group corresponding to the multicast packet received.

This enables the proxy server 3 to perform multicast communication without placing, in the network 2, a communication device (such as a router) adapted to multicast communication. Thus, an operator can avoid complicated network designing such as the placement and setting of a communication device that enables multicast communication.

The control apparatus 4 has the function of controlling packet transfer in the network 2 so that the multicast packet transmitted by the terminal 1 will reach the proxy server 3.

The control apparatus 4 controls, for example, a routing table of a router in the network 2 to perform control to make the multicast packet reach the proxy server 3. For example, the control apparatus 4 controls the routing table of the router existing in the network 2 so that a packet with an address including a multicast address will be transferred to the proxy server 3.

The control apparatus 4 may control, for example, packet transfer in the network 2 so that a multicast packet transmitted by a terminal 1 to the proxy server 3 will reach the proxy server 3. For example, the control apparatus 4 controls the routing table of the router in the network 2 to perform control to make the packet addressed to the proxy server 3 reach the proxy server 3. The control apparatus 4 may also have the function of notifying each terminal 1 of the address of the proxy server 3, respectively.

Next, the operation of the exemplary embodiment will be described.

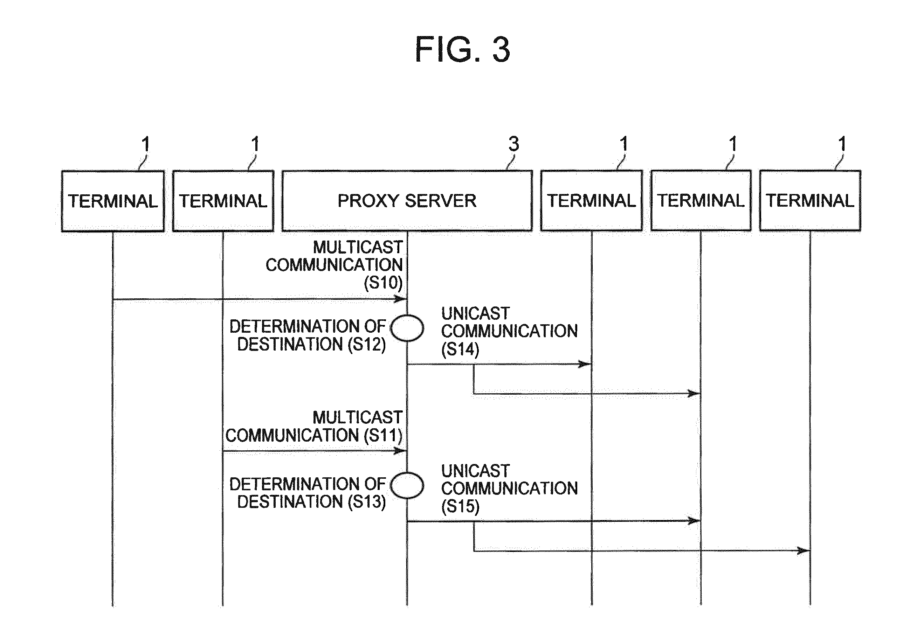

FIG. 3 is a sequence diagram showing an example of the operation of the communication system in the first exemplary embodiment.

A terminal 1 transmits a multicast packet (step S10, step S11). The control apparatus 4 controls the network 2 to make the multicast packet reach the proxy server 3.

The proxy server 3 that received the multicast packet determines the destination addresses of terminals 1 belonging to the group of the multicast packet (step S12, step S13).

The proxy server 3 transmits a unicast packet to each of the terminals belonging to the group of the received multicast packet, respectively (step S14, step S15).

As described above, when receiving a multicast packet from a terminal 1, the proxy server 3 in the exemplary embodiment transmits unicast packets to the addresses of terminals 1 belonging to a group corresponding to the multicast packet. Further, the control apparatus 4 for controlling the network controls the network so that multicast packets will be aggregated on the proxy server 3. This enables multicast communication without complicated network designing such as the placement and setting of a communication device that enables multicast communication. This enables multicast communication at a low management cost in a network where there exists a device that does not have a function corresponding to multicast communication. Further, since multicast packets transmitted from communication terminals are aggregated on the proxy server, the proxy server can perform centralized control of the execution of unicast communication based on multicast communication.

### Exemplary Embodiment 2

A second exemplary embodiment of the present invention will be described below with reference to the accompanying drawings.

In the second exemplary embodiment, configuration examples of the proxy server 3 and the control apparatus 4 will be described.

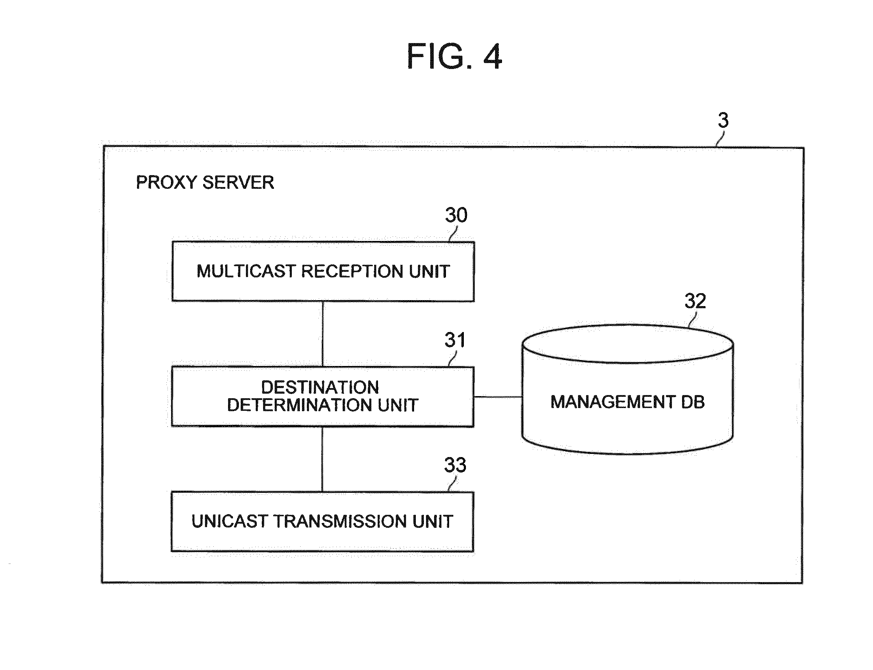

FIG. 4 is a block diagram showing an example of the configuration of the proxy server 3.

The proxy server 3 includes a multicast reception unit 30, a destination determination unit 31, a management DB (Data Base) 32, and a unicast transmission unit 33.

The multicast reception unit 30 receives a multicast packet through the network 2.

The destination determination unit 31 determines destination addresses belonging to a group corresponding to the multicast packet received. The destination determination unit 31 refers to information stored in the management DB 32 to determine the destination addresses.

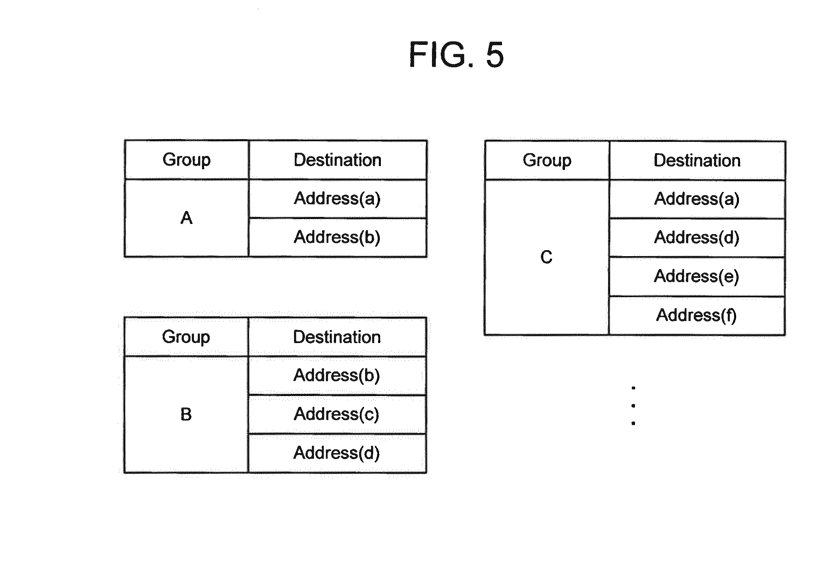

FIG. 5 is an explanatory diagram showing an example of the structure of the information stored in the management DB 32.

For example, the management DB 32 manages, for each group of multicast communication, destination addresses belonging to the group.

The unicast transmission unit 33 transmits a unicast packet to each address determined by the destination determination unit 31, respectively.

Note that the multicast reception unit 30, the destination determination unit 31, and the unicast transmission unit 33 are implemented, for example, by a computer operating according to a program. In this case, it is only necessary for a CPU provided in the proxy server 3 to read the program and operate as the multicast reception unit 30, the destination determination unit 31, and the unicast transmission unit 33 according to the program. The multicast reception unit 30, the destination determination unit 31, and the unicast transmission unit 33 may also be implemented by separate hardware.

The management DB 32 is realized by a storage device such as a memory provided in the proxy server 3.

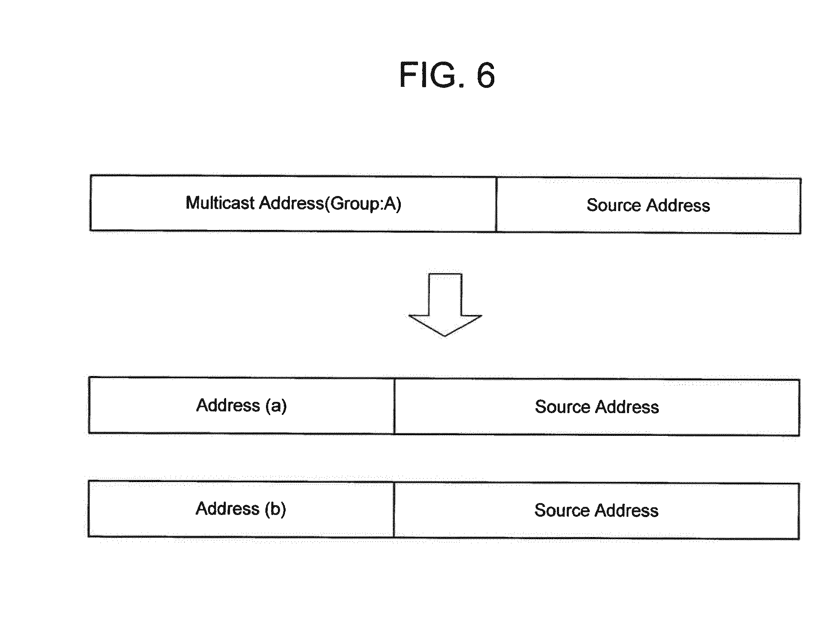

FIG. 6 is a schematic diagram showing an example of the headers of packets transmitted and received by the proxy server 3 in the second exemplary embodiment. FIG. 6 shows a multicast packet and unicast packets generated from the multicast packet.

Based on the destination addresses of a multicast packet received, the destination determination unit 31 determines a group corresponding to the multicast packet. "Multicast Address (Group: A)" included in FIG. 6 indicates that a group corresponding to the destination addresses of the multicast packet is "Group A." "Source Address" included in FIG. 6 represents the source address of the packet. In the example shown in FIG. 6, the destination determination unit 31 determines, from the destination addresses, that the group corresponding to the packet is "Group A."

The destination determination unit 31 refers to the management DB 32 to search for unicast addresses corresponding to "Group A." In the example shown in FIG. 5, the unicast addresses corresponding to "Group A" are "Address(a)" and "Address(b)." Therefore, the destination determination unit 31 determines that the unicast addresses corresponding to "Group A" are "Address(a)" and "Address(b)."

The unicast transmission unit 33 transmits packets to "Address(a)" and "Address(b)" as the destination addresses, respectively.

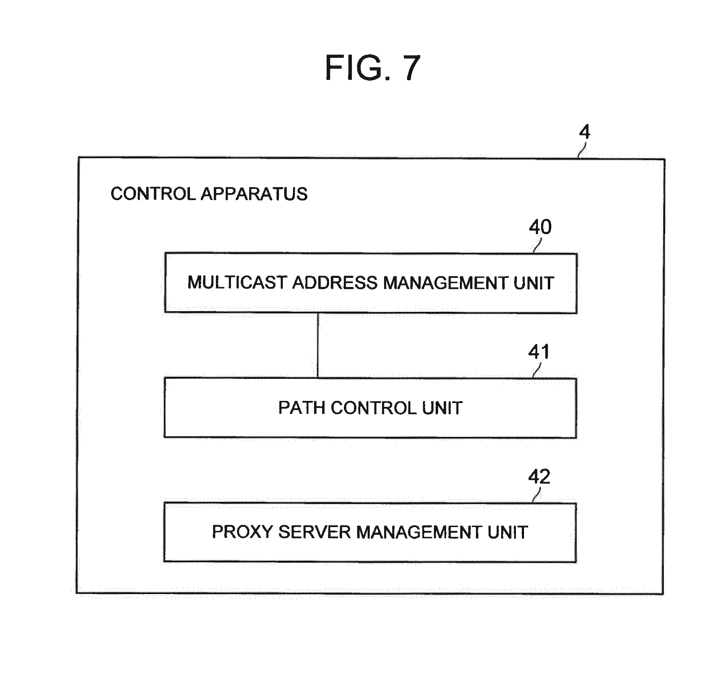

FIG. 7 is a block diagram showing an example of the configuration of the control apparatus 4.

The control apparatus 4 includes a multicast address management unit 40 and a path control unit 41.

The path control unit 41 controls a communication device (e.g., a router or a switch) existing in the network 2 to control packet transfer so that the multicast packet will reach the proxy server 3.

For example, the path control unit 41 refers to the multicast address management unit 40 to control the network 2.

For example, the multicast address management unit 40 manages an address system of multicast addresses used in the communication system. As the multicast addresses, an address range represented by "224.0.0.0/4" is generally used. The range "224.0.0.0/4" represents addresses in a range where the starting address is "224.0.0.0" and the ending address is "239.255.255.255." For example, the multicast address management unit 40 stores "224.0.0.0/4" as the address range used in the communication system.

For example, when the destination address of a received packet falls within the address range of "224.0.0.0/4," the path control unit 41 instructs the communication device of the network 2 to transfer the received packet to the proxy server 3.

Further, for example, the path control unit 41 may notify the terminals 1 of the address of the proxy server 3. A terminal 1 notified of the address of the proxy server 3 adds, to the packet addressed to the proxy server 3, information indicative of a group of multicast communication, and transmits it to the network 2. The path control unit 41 controls the communication device of the network 2 beforehand so that the packet addressed to the proxy server 3 will reach the proxy server 3.

The control apparatus 4 may also have the function of managing the proxy server 3. For example, the control apparatus 4 has a proxy server management unit 42 as the function of managing the proxy server 3.

For example, the operator of the communication system configures information on the management DB 32 illustrated in FIG. 5 through the proxy server management unit 42.

Note that the multicast address management unit 40, the path control unit 41, and the proxy server management unit 42 are implemented by a computer operating, for example, according to a transfer control program. In this case, it is only necessary for a CPU provided in the control apparatus 4 to read the transfer control program and operate as the multicast address management unit 40, the path control unit 41, and the proxy server management unit 42 according to the program. The multicast address management unit 40, the path control unit 41, and the proxy server management unit 42 may also be realized by separate hardware.

### Exemplary Embodiment 3

A third exemplary embodiment of the present invention will be described below with reference to the accompanying drawings.

In the third exemplary embodiment, a configuration example of making the proxy server 3 redundant will be described. The third exemplary embodiment can be combined with any of the aforementioned exemplary embodiments.

When multicast packets transmitted from respective terminals 1 are aggregated on the proxy server 3, an increase in the load on the proxy server 3 is a concern. In the third exemplary embodiment, the proxy server 3 is made redundant to enable a reduction in the load on the proxy server 3.

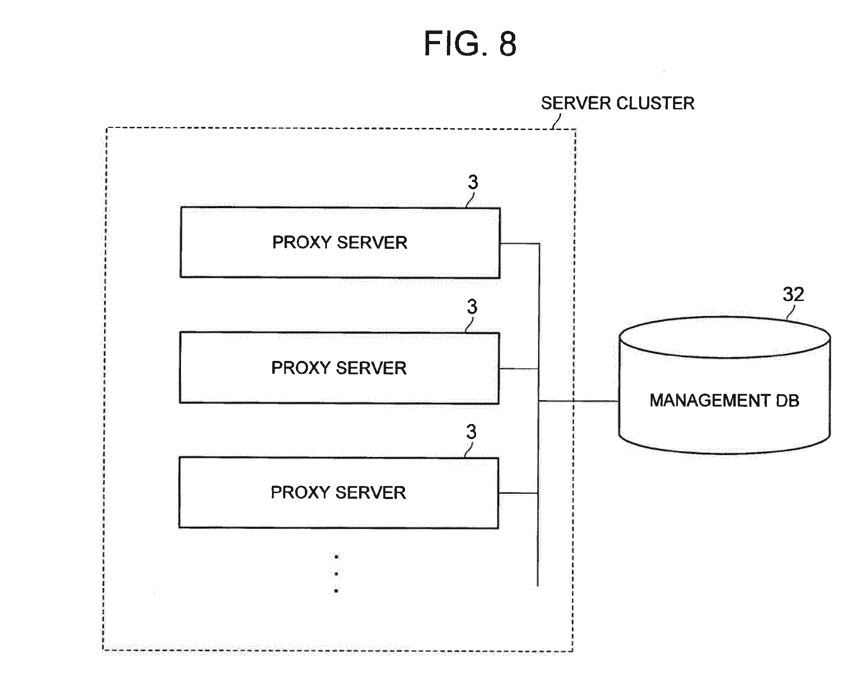

FIG. 8 is a block diagram showing an example of the configuration of a communication system in the third exemplary embodiment.

The multicast packets transmitted from the terminals 1 are distributed to multiple redundant proxy servers 3. On the other hand, if the management of the correspondence relationship between a group of multicast communication and unicast addresses corresponding to the group is distributed to the multiple proxy servers 3, an increase in management cost will be a concern. In the third exemplary embodiment, a server cluster, i.e., the multiple redundant proxy servers 3 share the management DB 32 to enable both the redundant load distribution and the reduction in management cost.

Since the configuration of the proxy server 3 and the structure of information stored in the management DB 32 are the same as those in the aforementioned exemplary embodiments, detailed description thereof will be omitted.

For example, the control apparatus 4 controls packet transfer in the network 2 so that multicast packets transmitted by terminals 1 will reach the multiple redundant proxy servers 3 in a distributed manner.

For example, the control apparatus 4 divides an address range of multicast addresses, and assign a proxy server 3 corresponding to multicast addresses in each divided address range. For example, the control apparatus 4 divides the address range of "224.0.0.0/4" into address ranges (A), (B), and (C), and assigns a corresponding proxy server 3 to each address range. For example, the control apparatus 4 assigns a proxy server 3 corresponding to each address range in round-robin fashion. For example, the control apparatus 4 controls the communication device of the network 2 to change the transfer destination of multicast packets in each divided address range. For example, when receiving multicast packets belonging to the address range (A), the control apparatus 4 instructs the communication device to transfer the received multicast packets to the proxy server 3 assigned to the address range (A).

Note that the system configuration in the third exemplary embodiment may be such that a load balancer, not shown in FIG. 8, collectively receives the multicast packets and sorts the packets into respective proxy servers 3.

### Exemplary Embodiment 4

A fourth exemplary embodiment of the present invention will be described below with reference to the accompanying drawings.

In the fourth exemplary embodiment, an example where terminals to be taken care of are assigned to each of multiple proxy servers 3 will be described. The multiple proxy servers 3 share the responsibility for the terminals to enable a reduction in the load on the proxy servers 3.

The fourth exemplary embodiment can be combined with any of the aforementioned exemplary embodiments.

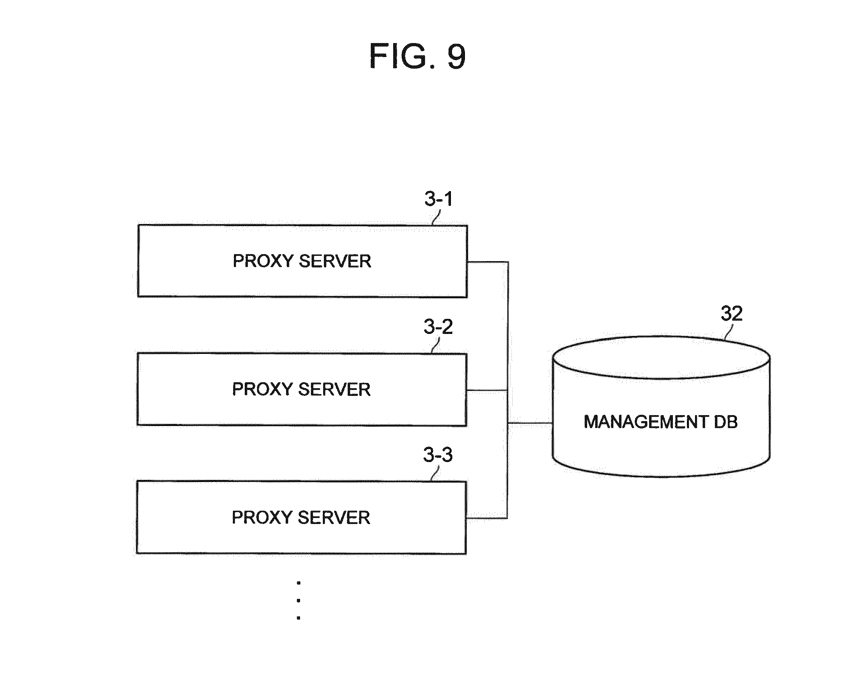

FIG. 9 is a block diagram showing an example of the configuration of a communication system in the fourth exemplary embodiment.

In the example shown in FIG. 9, terminals to be taken care of are assigned to each of proxy server 3-1, proxy server 3-2, and proxy server 3-3, respectively. Each proxy server handles only multicast packets transmitted from terminals to be taken care of.

Like in the third exemplary embodiment, respective proxy servers share the management DB 32 to reduce the cost of managing the correspondence relationship between a group of multicast communication and unicast addresses corresponding to the group.

Since the configuration of each proxy server 3 and the structure of information stored in the management DB 32 are the same as those in the aforementioned exemplary embodiments, detailed description thereof will be omitted.

For example, the control apparatus 4 determines terminals taken care of by each proxy server. The control apparatus 4 controls the communication device of the network 2 so that a multicast packet transmitted from each terminal will be transferred to a proxy server having charge of the terminal from which the packet has been transmitted.

For example, the control apparatus 4 controls the communication device to change the packet transfer destination according to the source address of the multicast packet received.

Note that a load balancer, not shown in FIG. 9, may collectively receive multicast packets and sort the packets into respective proxy servers having charge of terminals corresponding to source addresses according to the source addresses of the received packets.

### Exemplary Embodiment 5

A fifth exemplary embodiment of the present invention will be described below with reference to the accompanying drawings.

In the fifth exemplary embodiment, an example where a TEP (Tunnel EndPoint) transmits multicast packets in an overlay network will be described. The fifth exemplary embodiment can be combined with any of the aforementioned exemplary embodiments.

For example, VXLAN (Virtual Extensible LAN) as a technology for overlaying a layer 2 network on a layer 3 network uses multicast communication when transmitting an ARP (Address Resolution Protocol) request. According to the fifth exemplary embodiment, the present invention can also be applied to a technology for performing multicast communication on an overlay network.

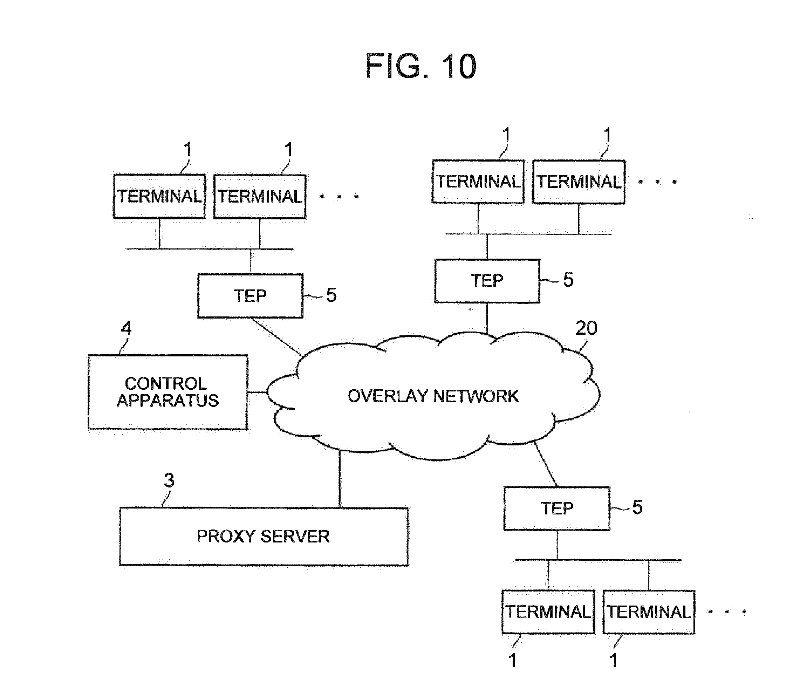

FIG. 10 is a block diagram showing an example of the configuration of a communication system in the fifth exemplary embodiment.

A terminal 1 communicates with an overlay network 20 through a TEP 5. For example, the TEP 5 encapsulates a packet transmitted from the terminal 1 and transmits it to the overlay network 20. Further, the TEP 5 decapsulates a packet addressed to a terminal 1 and transmitted from the overlay network 20, and transmits it to the terminal 1.

Since the other parts of the configuration are the same as those in the aforementioned exemplary embodiments, detailed description thereof will be omitted.

A multicast packet transmitted from a TEP 5 is aggregated on the proxy server 3. The proxy server 3 transmits unicast packets to each of TEPs 5 belonging to a group of the multicast packet received.

For example, the control apparatus 4 controls the overlay network 20 so that the multicast packet transmitted from the TEP 5 will reach the proxy server 3 by the method described in the aforementioned exemplary embodiments.

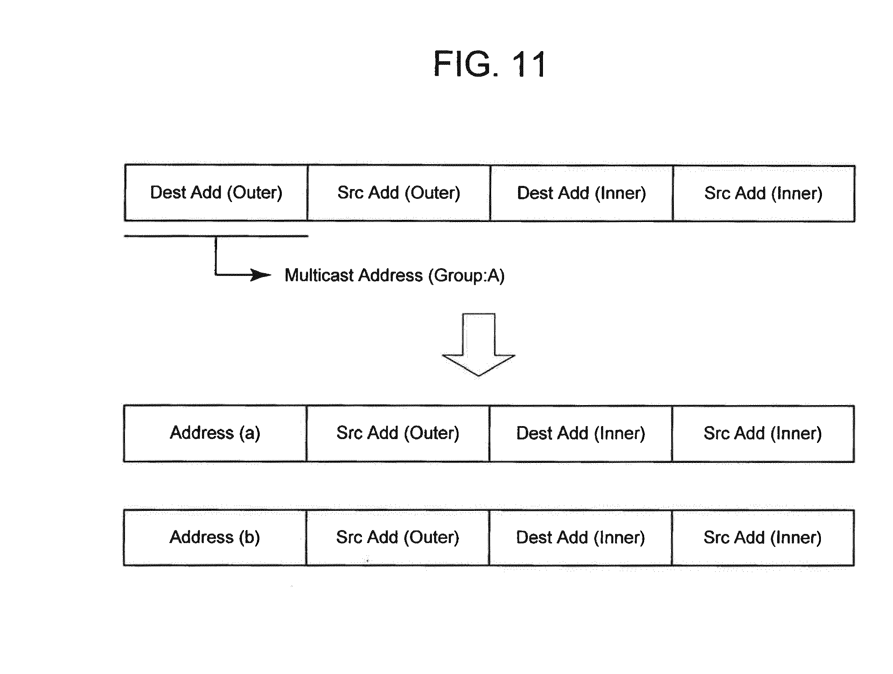

FIG. 11 is a schematic diagram showing an example of the headers of packets to be transmitted and received by the proxy server 3 in the fifth exemplary embodiment. FIG. 11 shows a multicast packet transmitted from the TEP 5 and unicast packets generated from the multicast packet.

"Outer" included in FIG. 11 represents information added to the packet in encapsulation processing by the TEP 5. "Inner" included in FIG. 11 represents header information before the encapsulation by the TEP 5. "Dest Add" included in FIG. 11 represents a destination address of the packet. "Src Add" included in FIG. 11 represents a source address of the packet.

The proxy server 3 receives a packet including a multicast address in the destination address of the Outer header. In the example shown in FIG. 11, it is assumed that a group corresponding to the multicast address is "Group A." Note that the destination address of the Outer header may be the address of the proxy server 3.

The proxy server 3 determines a group from the packet received. The proxy server 3 transmits unicast packets to the addresses of TEPs 5 belonging to the determined group, respectively. In the example shown in FIG. 11, the addresses of the TEPs 5 belonging to the group are "Address (a)" and "Address (b)."

While the exemplary embodiments of the present invention has been described, the present invention is not limited to each of the exemplary embodiments mentioned above. The present invention can be carried out based on any modification, substitution, or adjustment of each exemplary embodiment. The present invention can also be carried out by arbitrarily combining respective exemplary embodiments. In other words, the present invention includes various modifications and alterations that can be realized according to the entire disclosure and technical ideas of the specification.

This application is based upon and claims the benefit of priority from Japanese patent application No. 2012-266598, filed on December 5th, 2012, the disclosure of is incorporated herein in its entirety by reference.

### Reference Signs List

- 1: terminal
- 2: network
- 20: overlay network
- 3: proxy server
- 30: multicast reception unit
- 31: destination determination unit
- 32: management DB
- 33: unicast transmission unit
- 4: control apparatus
- 40: multicast address management unit
- 41: path control unit
- 42: proxy server management unit
- 5: TEP

## Claims

1. A communication system in which a plurality of communication terminals communicate through a network, comprising:
a control apparatus which controls packet transfer in the network; and
a proxy server which receives a multicast packet transmitted from each of the communication terminals and transmits unicast packets to communication terminals belonging to a group corresponding to the multicast packet, respectively,
wherein the control apparatus controls packet transfer in the network so that the multicast packet transmitted by the communication terminal will be transferred to the proxy server.

2. The communication system according to claim 1, wherein the control apparatus controls packet transfer in the network so that multicast packets transmitted by the plurality of communication terminals will be aggregated on the proxy server.

3. The communication system according to claim 1 or 2, wherein the proxy server performs centralized management of a correspondence relationship between a multicast communication group and unicast addresses corresponding to the group.

4. The communication system according to any one of claims 1 to 3, wherein
the communication system includes a plurality of proxy servers, and
the control apparatus controls packet transfer in the network so that a multicast packet transmitted from a communication terminal will be transferred to a proxy server corresponding to the communication terminal among the plurality of proxy servers.

5. The communication system according to any one of claims 1 to 4, wherein
the communication system includes a plurality of proxy servers,
the plurality of proxy servers share a database in which a correspondence relationship between a multicast communication group and unicast addresses corresponding to the group is stored, and
each of the proxy servers searches the database for unicast addresses in a group corresponding to a multicast packet received.

6. A control apparatus in a communication system in which a plurality of communication terminals communicate through a network,
wherein the control apparatus controls packet transfer in the network so that a multicast packet transmitted by each of the communication terminals will be transferred to a proxy server for transmitting a unicast packet to each of communication terminals belonging to a group corresponding to the multicast packet, respectively.

7. The control apparatus according to claim 6, wherein the control apparatus controls packet transfer in the network so that multicast packets transmitted by the plurality of communication terminals will be aggregated on the proxy server.

8. The control apparatus according to claim 6 or 7, wherein the control apparatus controls packet transfer in the network so that a multicast packet transmitted from a communication terminal will be transferred to a proxy server corresponding to the communication terminal among a plurality of proxy servers.

9. A communication control method in a communication system in which a plurality of communication terminals communicate through a network, wherein
a control apparatus controls packet transfer in the network so that a multicast packet transmitted by each of the communication terminals will be transferred to a proxy server, and
the proxy server receives the multicast packet transmitted from the communication terminal and transmits a unicast packet to each of communication terminals belonging to a group corresponding to the multicast packet, respectively.

10. The communication control method according to claim 9, wherein the control apparatus controls packet transfer in the network so that multicast packets transmitted by the plurality of communication terminals will be aggregated on the proxy server.

11. The communication control method according to claim 9 or 10, wherein the proxy server performs centralized management of a correspondence relationship between a multicast communication group and unicast addresses corresponding to the group.

12. The communication control method according to any one of claims 9 to 11, wherein the control apparatus controls packet transfer in the network so that a multicast packet transmitted from a communication terminal will be transferred to a proxy server corresponding to the communication terminal among a plurality of proxy servers.

13. The communication control method according to any one of claims 9 to 12, wherein
a plurality of proxy servers share a database in which a correspondence relationship between a multicast communication group and unicast addresses corresponding to the group is stored, and
each of the proxy servers searches the database for unicast addresses in a group corresponding to a multicast packet received.

14. A transfer control method in a control apparatus applied to a communication system in which a plurality of communication terminals communicate through a network, wherein
packet transfer in the network is so controlled that a multicast packet transmitted by each of the communication terminals will be transferred to a proxy server for transmitting a unicast packet to each of communication terminals belonging to a group corresponding to the multicast packet, respectively.

15. The transfer control method according to claim 14, wherein packet transfer by the network is so controlled that multicast packets transmitted by the plurality of communication terminals will be aggregated on the proxy server.

16. The transfer control method according to claim 14 or 15, wherein packet transfer in the network is so controlled that a multicast packet transmitted from a communication terminal will be transferred to a proxy server corresponding to the communication terminal among a plurality of proxy servers.

17. A transfer control program in a communication system in which a plurality of communication terminals communicate through a network, the program causing a computer to execute
a process of controlling packet transfer in the network so that a multicast packet transmitted by each of the communication terminals will be transferred to a proxy server for transmitting a unicast packet to each of communication terminals belonging to a group corresponding to the multicast packet, respectively.

18. The transfer control program according to claim 17, further causing the computer to execute
a process of controlling packet transfer in the network so that multicast packets transmitted by the plurality of communication terminals will be aggregated on the proxy server.

19. The transfer control program according to claim 17 or 18, further causing the computer to execute
a process of controlling packet transfer in the network so that a multicast packet transmitted from a communication terminal will be transferred to a proxy server corresponding to the communication terminal among a plurality of proxy servers.
